(19) Europäisches Patentamt

European Patent Office

Office européen des brevets

(11) **EP 1 954 087 A1**

(12) **EUROPEAN PATENT APPLICATION**

(43) Date of publication:
06.08.2008 Bulletin 2008/32

(51) Int Cl.:
*H04Q 7/38* (2006.01)

(21) Application number: 07002424.5

(22) Date of filing: 05.02.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: Nokia Siemens Networks GmbH & Co.
KG
81541 München (DE)

(72) Inventor: **The designation of the inventor has not
yet been filed**

(54) **Method for reducing collisions and apparatus thereof**

(57) Method and Apparatus thereof for reducing collisions during an access procedure between a plurality of user equipments (10) in a radio communications system (1000), comprising the steps of:
- allocating by at least one access point (100) of a plurality of access points, groups of resources for user equipments (10), said allocation depending on at least one quality of service requirement;
- transmitting said allocation by said at least one access point (100) over a first channel to said plurality of user equipments (10), and
- upon receiving said allocation a user equipment (10) of said plurality selecting an appropriate resource from at least one group of said groups, said selection depending on a service requirement of said user equipment (10).

FIG 2

```
        Start
          │
          ▼
       ┌────────┐
       │ Step 1 │
       └────────┘
          │
          ▼
       ┌────────┐
       │ Step 2 │
       └────────┘
          │
          ▼
        END
```

EP 1 954 087 A1

**Description**

**Field of the invention**

The invention is used in a radio communications system to

**Summary of the invention**

In radio communications systems such as 3G (3rd Generation Wireless Mobile Communication Technology), 3G Long Term Evolution (LTE) or 4G (4th Generation Wireless Mobile Communication Technology), user equipments (UEs) execute a random access procedure in order to access the radio communications network at arbitrary times. For this purpose time/frequency/code resources are allocated to the UEs and are usually shared among all UEs present. Collisions may occur during random access attempt of more UEs. This occurs when, for example when two or more UEs attempt to access the RACH (Random Access Channel) for example, in order to execute the random access procedure at the same time.

This results in the UEs stoping the access procedure for a random amount of time, termed the backoff period, before strating again. However, this delay results in a UE not being in communication with an AP (Access Point) and thus not accessing the radio communications system. For services having real-time requirements that a UE wishes to use such as streaming data, internet services, gaming services or simply voice communications, such delays reduce the efficiency of the services and the overall efficiency of the radio communications system.

A need therefore exists for a technique that reduces the amount of collisions that occur within a radio communications system between UEs as well as improving the efficiency of the radio communications system and of the services that are being provided.

With the present invention, the above mentioned issues are resolved. The technique is achieved by the teachings contained in the independent claims. Preferred embodiments of the invention are described in the dependent claims.

Said independent method reduces collisions during an access procedure between a plurality of user equipments in a radio communications system, comprises the steps of:

- allocating by at least one access point of a plurality of access points, groups of resources for user equipments, said allocation depending on at least one quality of service requirement;
- transmitting said allocation by said at least one access point over a first channel to said plurality of user equipments, and
- upon receiving said allocation a user equipment of said plurality selecting an appropriate resource from at least one group of said groups, said selection depending on a service requirement of said user equipment.

Said independent access point has means arranged to execute the method of claim 1.

Said independent user equipment has means arranged to execute the method of claim 1.

**Short description of the drawings**

The present invention will become more apparent from the description given herein below by way of illustration only, and thus are not limitative of the present invention and wherein:

Fig. 1 depicts a radio communications system wherein the inventive technique is implemented.

Fig. 2 depicts a flow diagram indicating the steps of the inventive technique.

**Detailed description of the invention**

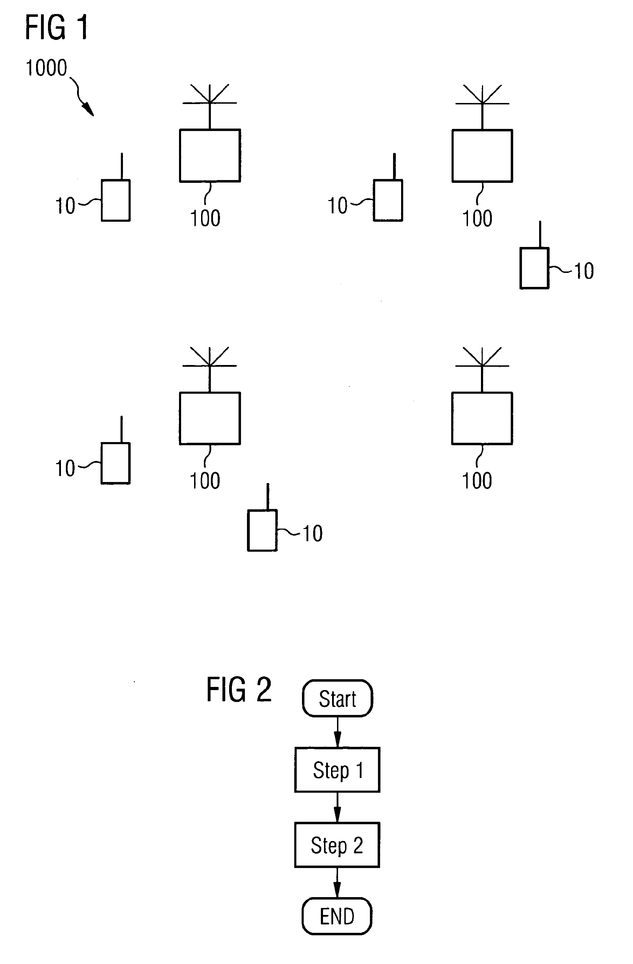

Fig. 1 depicts a radio communications system 1000 wherein the inventive technique is implemented. Radio communications system 1000 comprises of a plurality of UEs 10 and a plurality of APs 100 that allow the UEs 10 to access the radio communications system 1000 and via the radio communications system 1000 to connect to the Internet and/or the PSTN (Public Switched Telephone Network). Radio communications system 1000 can provide at least one of the following services to UEs 10: internet services, voice services, gaming services, streaming services etc. A UE 10 can be at least one of the following: a mobile/cellular phone, a personal computer or any other device enabled to connect to radio communications system 1000. An AP 100 can be at least one of the following: a BS (base station), a nodeB, an enodeB, a RNC (radio network controller), a BSC (base station controller). Both UEs 10 and APs 100 comprise of means arranged to implement the inventive technique. These means can be implemented in at least one of the following:

a microcomputer, an integrated circuit, a chip.

Fig. 2 depicts a flow diagram indicating the steps of the inventive technique.

In step 1 an AP 100 allocates groups of resources for UEs 10. The allocation depends on at least one quality of service requirement. In a further refinement of the inventive technique, the at least one quality of service requirement (QoS) is a length of access time required for the access procedure that a UE 10 requires. The resources that are allocated are, in a refinement of the inventive technique, access resources used by the UEs 10 during an access procedure. These access resources can be at least one of the following: a frequency resource, a time resource, a code to be used during the access procedure. In order to avoid collisions more resources are allocated to groups having an increased QoS requirement i.e. such groups require a length of access time that is short. Less resources are allocated to groups having lesser QoS requirement and so on. The allocation of the amount of resources into groups according to QoS requirements can be predefined by a network operator or can be modified in real-time for example according to the number of UEs 10 present in the radio communications system 1000 or within a cell being controlled by an AP 100, or by taking statistical information about the number and type of services being requested or the number of collisions having occurred.

In step 2, the AP 100 transmits the allocation over a first channel, for example over a downlink shared channel, to the UEs 10. In step 3, a UE 10 upon receiving the allocation selects an appropriate resource from at least one group, wherein the selection depends on a service requirement of the UE 10, for example, for a service involving streaming data a very short access time is required, therefore the UE 10 will select resources that are grouped within a group allocated to a high QoS requirements. In the case that there exist a number of different groups having resources allocated according to different high QoS requirements, the UE 10 can select one according to a previous effected selection, or according to the amount of data that has to be transmitted etc.

In a futher illustration of the inventive technique a further example is given, wherein a radio communications system 1000, such as 3G LTE is used. However, the same inventive technique can be applied in other radio communications system as well.

According to TS (Technical Standard) 25.814 "Physical layer aspect for evolved Universal Terrestrial Radio Access (UTRA)" in LTE two types of RACH (Random Access Channel) may be classified: synchronized and non-synchronized. The non-synchronized access is used when the UE uplink has not been time synchronized or UE uplink loses synchronization. The non-synchronized access allows the eNodeB to estimate, and, if needed, adjust the UE transmission timing to within a fraction of the cyclic prefix. The synchronized random access may be used when the UE uplink is time synchronized by the NodeB. The purpose is for the UE to request resources for uplink data transmission.

Random access procedure may be generally performed in contention free or contention based manner. Contention based means there are less orthogonal resources than possible UEs 10 or one orthogonal resource is not exclusively allocated to one UE 10.

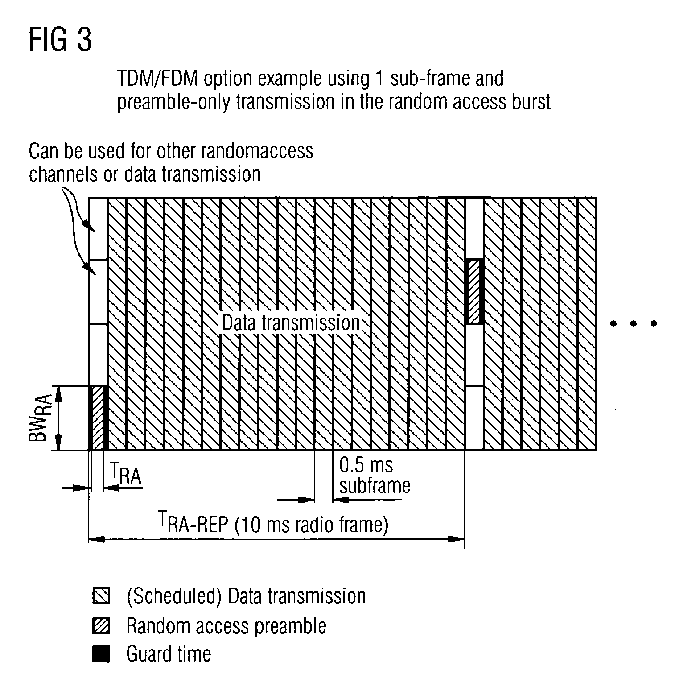

The random-access procedure is based on transmission of a random-access burst (preamble). Time frequency resources for the random-access attempts are controlled by the RRM (Radio Resource Management) configuration. This is illustrated in Figure 3, where random-access transmissions are restricted to certain time or frequency resources, for example FDM (Frequency Division Multiplexing) or TDM (Time Division Multiplexing). Another option is where random access transmissions are not restricted to a particular time or frequency resource, like for example CDM (Code Division Multiplexing).

Random access burst contains a signature which identifies the UE 10 executing the random access procedure. For example in the LTE Zadoff-Chu sequences can be used for this purpose. From the whole set, sequences with acceptable cross-correlation and autocorrelation properties can be chosen.

The RACH procedure may be performed as follows. The UE 10 randomly chooses a signature from the code set and creates preamble. Preamble is transmitted on certain well known time/frequency/code resources. If there are more frequency regions at the same time allocated for random access, the UE 10 may choose randomly one of them. The eNodeB 100 correlates received bursts with all signatures and waits for the peak on the output of autocorrelation function. Collision occurs if two or more UEs choose identical preamble signatures and transmit on the same random access frequency block in the same time.

**Capacity of RACH and random access opportunities split**

Total number of RACH opportunities may be counted as $N_{RACH} = N_{T*} N_{F*} N_{sign}$, where $N_T$ is number of time slots per second, $N_F$ is number of frequency blocks per time slot and $N_{sign}$ is number of preamble sequences.

If the number of RACH opportunities grows, probability of collision decreases and vice versa. The proposed inventive technique, is to allocate an amount of random access resources to those UEs 10 which demand short access times (also defined as golden or first class users/services) and less to those with lower demands (silver, bronze etc. or low class) .

In practice it would mean that from the set of signatures (let assume 256 of them) we allocate 20 signatures for 40 "golden" UEs, another 20 signatures for 200 silver UEs and the rest 216 signatures for 3000 remaining camped UE in the cell. A similar approach may be applied to the time and frequency resources. The number of groups or the way of division is not limited and should be chosen in order to optimally meet QoS (Quality of Service) requirements in particular network (cell).

For a better illustration, we introduce calculations for non-synchronized RACH with the following assumptions. There are 4000 UEs 10 camped (located) in the cell and may use services with three QoS classes. A signature from the defined group which is most appropriate to the class of the service a UE wants (or is permitted to use) is chosen. In the first group 16 signatures are assumed for 32 UEs 10, on average 2 UEs 10 for 1 signature. In the second group 32 signatures are allocated for 256 UEs 10 what leads to 8 UEs 10 per signature in average. Remaining signatures (208) are used by remaining 3712 UEs 10. For the simplification random access slot occurs each 10 ms and there is one frequency block per slot.

The collision probability per one signature is given by following formula:

$$P_{collision\_sign} = 1 - e^{-\frac{\gamma}{N_T N_F N_{sign}}}\left(1 + \frac{\gamma}{N_T N_F N_{sign}}\right),$$

where $\gamma$ is the average number of non-synchronized RACH attempts per second and NT is number of time slots per second, NF is number of frequency blocks per time slot and $N_{sign}$ is number of preamble sequences as has already been indicated above. Furthermore, the probability which at least one collision happens within a time slot, $P_{collision\_slot}$, is represented as

$$P_{collision\_slot} = 1 - \left(1 - P_{collision\_sign}\right)^{N_F N_{sig}},$$

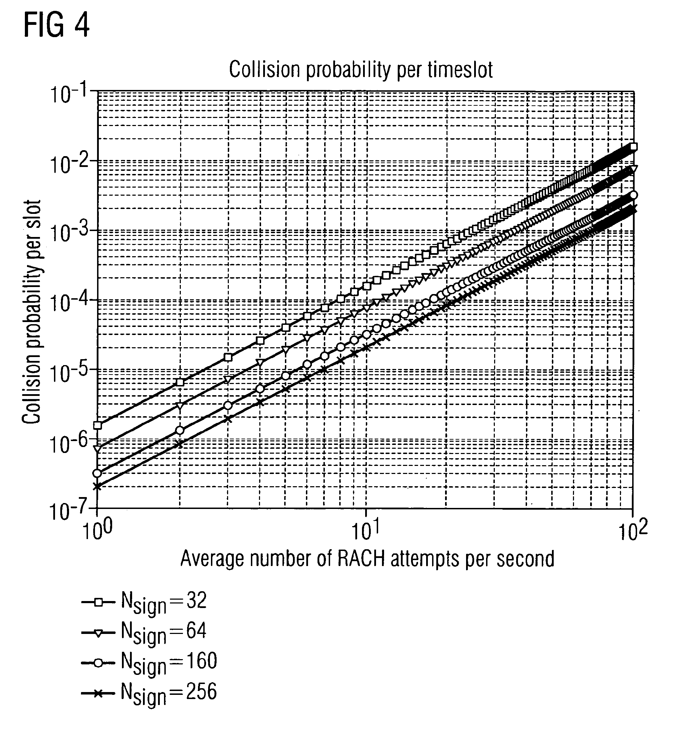

The Figure 4 shows the collision probability per time slot, $P_{collision\_slot}$, as a function of $\gamma$.

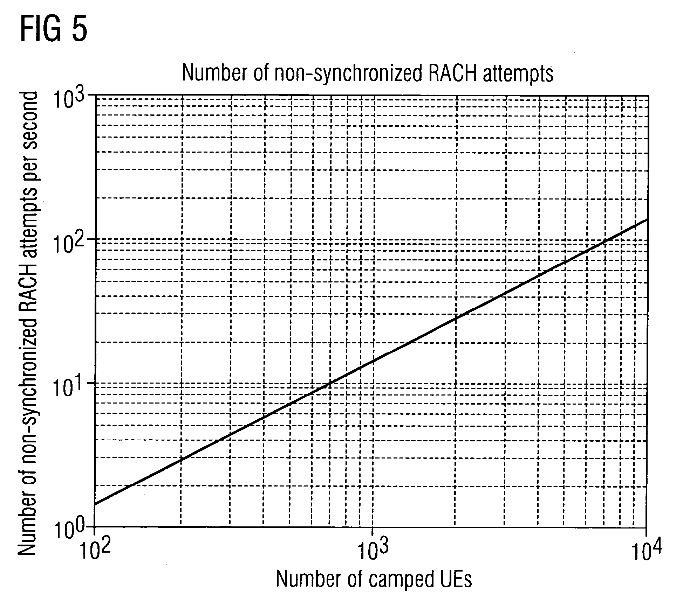

Assuming the traffic model of Table 1, the number of non-synchronized RACH attempts is derived as in the Figure 5. The horizontal axis represents the number of camped UEs 10 in a cell, and the vertical axis is the number of non-synchronised RACH attempts per second per cell. The line shows the number of non-synchronised RACH attempts corresponding to the traffic model.

According to the proposed traffic model average number of RACH attempts for 100 UEs 10 is less than 2 per second (exactly 1.3472). For this number of attempts probability of collision is 2.8351e-6. For the second group (500UEs, 64 signatures) probability of collision is 3.5424e-5 and for the remaining UEs 10 (2600 UEs, 160 signatures) the collision probability is 3.8279e-004. If there was not any split according to QoS (Quality of Service) then the collision probability with the same model for all 3000 UEs 10 in the cell and 256 available signatures would be 3.1866e-4. From these calculations it may be seen that low QoS UEs 10 suffer from less access opportunities, but the performance of the whole radio communications system should better meet traffic requirements.

**Signalling and decision in the UE**

The UE 10 could obtain signatures (information how sequences are generated) from a received transmission over a downlink shared channel from enodeB 100 once it enters the cell. The same applies for the QoS extension, whereby information concerning which groups are available for different QoS requirements and what are the parameters for each group is also obtained from downlink transmissions. The UE 10 would than decide alone what kind of QoS is required and would chose signature from the appropriate group. Furthermore in order to decrease amount of necessary control information in the downlink, some well known groups matched to certain QoS may be standardised and eNodeB 100 would signal only labels of available groups in the cell. The UE 10 would have lookup table where parameters could be found.

**Further improvements**

Collision probability may be significantly reduced if the following idea is applied. It is more efficient to split candidates for random access into smaller groups and exclusively allocate corresponding amount of the resources for this group, than use only one big group and randomly access all resources.

Collision is the lowest if following conditions are fulfilled. Size of the group should be calculated as $N_{group}$ = ceil ($N_{candidates}/N_{resources}$), where $N_{group}$ is size of the group, $N_{candidates}$ is number of all random access candidates and $N_{resources}$ is number of available resources. Result of division is rounded up to the closest integer.

Calculation is performed in the example. If we have 256 signatures and 3072 UEs 10, collision probability is 3.3413e-004 (same calculation as in the previous example). If 3072 UEs 10 are split into 256 groups of 32 UEs 10 and one signature from 256 is assigned to each group, than collision probability in each group is only 9.2662e-006 and we are still able to serve same number of UEs 10, i.e. 3072.

There is one big drawback, how to allocate the groups and how to signal the allocations to the UEs, while keeping signalling at a reasonable level. The brute force approach would be to transmit separately to each UE 10 which group it belongs to, but the eNodeB 100 sometimes does not even know what UEs are in its cell. Frequent handovers also cause problems. The following solution is proposed. It would be possible to focus only on the relatively small group of UEs 10. The UE 10 could transmit request to be assigned to the certain group once special session is started (e.g. game of VoIP call) and the code would remain allocated over duration of the session. This would require increased processing in eNodeB 100 (code and assignment to the UE 10 needs to be kept) and also interaction with higher layers (for example Layer-3). The advantage is that it brings similar collision probabilities are possible with fewer resources, or collision probability is significantly decreased if the amount of the resources remain unchanged. Here we described only the case with the signatures (codes), but a split in time or frequency domain is also possible.

Advantages of the proposed inventive technique are:

It may be applied to any kind of random access (synchronous, asynchronous or combined) and has a low signalling overhead. It may be applied in a variety of radio communications system which use random access procedure, for example WIMAX, WINNER. Random access with defined collision parameters for a given QoS can be used.

Random access performance can be set according to required collision probability. Access time for some defined services is shorter which may help to fulfill required QoS.

Background non-time critical services do not take resources which can be used for demanding applications.

Better resource utilization can be set by a network operator according to expected traffic in the cell.

The inventive technique can also be implemented in LTE where resources are allocated for scheduling transmissions for services that consume a lot of resources, like for example gaming where short reaction time is required in order to fulfill users' expectations. This consumes a lot of resources which are dedicated and most of the time not used. Asynchronous random access can be much more suitable for this kind of asynchronous traffic, if short access time are guaranteed. For the idea of creating small group and dedicating corresponding amount of random access opportunities application is proposed with reasonable amount of signaling.

Although the invention has been described in terms of preferred embodiments and refinements described herein, those skilled in the art will appreciate other embodiments and modifications which can be made without departing from the scope of the teachings of the invention. All such modifications are intended to be included within the scope of the claims appended hereto.

**Claims**

1. Method for reducing collisions during an access procedure between a plurality of user equipments (10) in a radio communications system (1000), comprising the steps of:

   - allocating by at least one access point (100) of a plurality of access points, groups of resources for user equipments (10), said allocation depending on at least one quality of service requirement;
   - transmitting said allocation by said at least one access point (100) over a first channel to said plurality of user equipments (10), and
   - upon receiving said allocation a user equipment (10) of said plurality selecting an appropriate resource from at least one group of said groups, said selection depending on a service requirement of said user equipment (10).

2. Method according to claim 1, wherein said at least one quality of service requirement is a length of access time required for said access procedure.

3. Method according to claims 1 or 2, wherein said groups of resources are access resources used by said user equipments (10) during said access procedure.

4. Method according to claim 3, wherein said access resources are at least one of the following: a frequency resource, a time resource, a code.

5. Access point (100) having means arranged to execute the method of claims 1 to 4.

6. User equipment (10) having means arranged to execute the method of claims 1 to 4.

7. Radio communications system (1000) having at least one access point (100) according to claim 5 and at least one user equipment (10) according to claim 6.

## FIG 1

1000

10

100

10

100

10

10

100

100

10

## FIG 2

Start

Step 1

Step 2

END

# FIG 3

TDM/FDM option example using 1 sub-frame and
preamble-only transmission in the random access burst

Can be used for other randomaccess
channels or data transmission

Data transmission

$BW_{RA}$

$T_{RA}$

0.5 ms
subframe

$T_{RA\text{-}REP}$ (10 ms radio frame)

⊠   (Scheduled) Data transmission
▨   Random access preamble
■   Guard time

# FIG 4

Collision probability per timeslot

—□— $N_{sign}=32$
—▽— $N_{sign}=64$
—○— $N_{sign}=160$
—✕— $N_{sign}=256$

# FIG 5

Number of non-synchronized RACH attempts

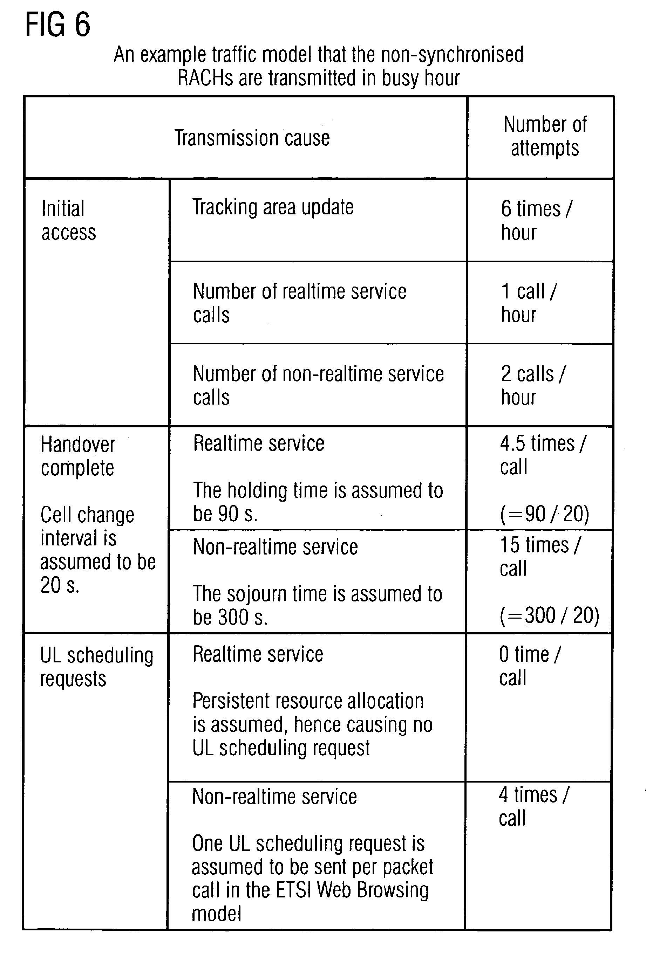

# FIG 6

An example traffic model that the non-synchronised
RACHs are transmitted in busy hour

| Transmission cause | | Number of attempts |
|---|---|---|
| Initial access | Tracking area update | 6 times / hour |
| | Number of realtime service calls | 1 call / hour |
| | Number of non-realtime service calls | 2 calls / hour |
| Handover complete

Cell change interval is assumed to be 20 s. | Realtime service

The holding time is assumed to be 90 s. | 4.5 times / call

(=90 / 20) |
| | Non-realtime service

The sojourn time is assumed to be 300 s. | 15 times / call

(=300 / 20) |
| UL scheduling requests | Realtime service

Persistent resource allocation is assumed, hence causing no UL scheduling request | 0 time / call |
| | Non-realtime service

One UL scheduling request is assumed to be sent per packet call in the ETSI Web Browsing model | 4 times / call |

**European Patent Office**

**EUROPEAN SEARCH REPORT**

**Application Number**

EP 07 00 2424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/041578 A1 (KIM KYOU-WOONG [KR] ET AL) 11 April 2002 (2002-04-11)<br>* abstract *<br>* page 2, right-hand column, line 1 - page 3, left-hand column, line 15 *<br>* page 3, right-hand column, line 1 - line 25 *<br>* page 4, left-hand column, line 1 - line 44 *<br>* figures 2-4 * | 1-7 | INV.<br>H04Q7/38 |
| X | US 2006/018336 A1 (SUTIVONG ARAK [US] ET AL) 26 January 2006 (2006-01-26)<br>* abstract *<br>* paragraph [0007] - paragraph [0015] *<br>* paragraph [0038] - paragraph [0067] * | 1-7 | |
| A | US 2004/032877 A1 (CHUAH MOOI CHOO [US] ET AL) 19 February 2004 (2004-02-19)<br>* abstract *<br>* paragraph [0003] - paragraph [0005] *<br>* paragraph [0018] - paragraph [0021] *<br>* figures 1-5 * | 1-7 | TECHNICAL FIELDS SEARCHED (IPC)<br><br>H04Q<br>H04L |
| A | 3GPP: "Medium Access Control (MAC) protocol specification (Release 7); 3GPP TS 25.321 v7.3.0"<br>3RD GENERATION PARTNERSHIP PROJECT; TECHNICAL SPECIFICATION GROUP RADIO ACCESS NETWORK, [Online]<br>21 December 2006 (2006-12-21), pages 66-72, XP002443498<br>INET: www.3gpp.org<br>Retrieved from the Internet:<br>URL:http://www.3gpp.org/ftp/Specs/archive/25_series/25.321/25321-730.zip><br>[retrieved on 2007-07-20]<br>* the whole document * | 1-7 | |

-/--

The present search report has been drawn up for all claims

| Place of search | Date of completion of the search | Examiner |
|---|---|---|
| Munich | 20 July 2007 | MORENO-SOLANA, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent**
**Office**

## EUROPEAN SEARCH REPORT

Application Number

EP 07 00 2424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEYARATNARAJAH NITHTHIYANATHAN - NOKIA OYJ: "Performance analysis of the Random Access Procedure in WCDMA"[Online] 23 November 2002 (2002-11-23), pages 1-15, XP002443499 INET: http://www.netlab.tkk.fi Retrieved from the Internet: URL:http://www.netlab.tkk.fi/opetus/s38149 /s02/reports/RACH_jn.pdf> [retrieved on 2007-07-20] * the whole document * ----- | 1-7 | |
| | | | TECHNICAL FIELDS SEARCHED (IPC) |

The present search report has been drawn up for all claims

| Place of search | Date of completion of the search | Examiner |
|---|---|---|
| Munich | 20 July 2007 | MORENO-SOLANA, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 2424

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2007

| Patent document cited in search report | | Publication date | Patent family member(s) | | Publication date |
|---|---|---|---|---|---|
| US 2002041578 | A1 | 11-04-2002 | CN | 1381107 A | 20-11-2002 |
| | | | DE | 60113044 D1 | 06-10-2005 |
| | | | DE | 60113044 T2 | 02-03-2006 |
| | | | EP | 1212853 A1 | 12-06-2002 |
| | | | JP | 3801983 B2 | 26-07-2006 |
| | | | JP | 2003535553 T | 25-11-2003 |
| | | | WO | 0193462 A1 | 06-12-2001 |
| US 2006018336 | A1 | 26-01-2006 | AR | 050002 A1 | 20-09-2006 |
| | | | AU | 2005275341 A1 | 23-02-2006 |
| | | | CA | 2574804 A1 | 23-02-2006 |
| | | | EP | 1774822 A1 | 18-04-2007 |
| | | | KR | 20070042550 A | 23-04-2007 |
| | | | WO | 2006019710 A1 | 23-02-2006 |
| US 2004032877 | A1 | 19-02-2004 | NONE | | |

EPO FORM P0459